Europäisches Patentamt

**European Patent Office**

**Office européen des brevets**

(19)

(11) Veröffentlichungsnummer: **0 012 114**
**B1**

(12) **EUROPÄISCHE PATENTSCHRIFT**

(45) Veröffentlichungstag der Patentschrift:
**10.07.85**

(51) Int. Cl.⁴: **C 03 C  11/00,** C 03 B  19/08

(21) Anmeldenummer: **79810166.3**

(22) Anmeldetag: **27.11.79**

(54) **Schaumglas-Granulat und Verfahren zu dessen Herstellung.**

(30) Priorität: **30.11.78  CH 12265/78**

(43) Veröffentlichungstag der Anmeldung:
**11.06.80 Patentblatt 80/12**

(45) Bekanntmachung des Hinweises auf die Patenterteilung:
**10.07.85 Patentblatt 85/28**

(84) Benannte Vertragsstaaten:
**AT BE CH DE FR GB IT LU NL SE**

(56) Entgegenhaltungen:
**CH - A - 449 500**
**GB - A - 918 190**
**US - A - 3 562 370**

(73) Patentinhaber: **Millcell AG, Brünigstrasse 81,
CH-6060 Sarnen (CH)**

(72) Erfinder: **Vieli, Otto Anton, Casa Vieli, CH-7499 Rhäzüns
(CH)**

(74) Vertreter: **Schmauder, Klaus Dieter et al, c/o Schmauder
& Wann Patentanwaltsbüro Nidelbadstrasse 75,
CH-8038 Zürich (CH)**

BUNDESDRUCKEREI BERLIN

## Beschreibung

Es sind bereits Verfahren bekannt (vgl. CH-A-426 601, 473 741 und EP-A-10 069), um aus Glasmehl unter Zusatz eines Blähmittels, welches bei höheren Temperaturen Gas abspaltet, Schaumglas-Granulat herzustellen.

Zur Erzeugung von Schaumglas-Granulat war es dabei erforderlich, daß man zunächst das Rohmaterial zu einem Mehl vermahlt, dieses mit einem in der Wärme Gas entwickelnden Blähmittel vermischt und aus dem erhaltenen Gemisch Rohkörper formt. Das so erhaltene Rohgranulat wurde dann, zweckmäßig zusammen mit einem Trennmittel, in einem Ofen oder auf einem Trockenband vorgewärmt und gebläht.

Das auf diese Weise hergestellte Schaumglas-Granulat wies eine inhomogene Struktur auf, indem die Bläschengröße und -verteilung in der Oberflächenzone des einzelnen Kornes anders war als im Inneren desselben. Dies führte zu einem Abfall der Druckfestigkeit in der Oberflächenzone des einzelnen Kornes und damit zu einem Abfall der Druckfestigkeit insgesamt.

Weiter sind auch bereits Verfahren beschrieben (vgl. LU-A-79 661, DE-A-2 206 448 und 2 224 009), um Glasschaumblöcke oder -platten herzustellen, die gewünschtenfalls zu Granulat zerkleinert werden können. Die genannten Veröffentlichungen enthalten jedoch keinerlei Angaben über die physikalischen und mechanischen Eigenschaften des Granulates. Dem Fachmann ist jedoch klar, daß nach den beschriebenen Verfahren nur relativ grobporige Produkte mit geringer Porenzahl und uneinheitlicher Porengröße, relativ hohem spezifischem Gewicht und geringer Druckfestigkeit erhältlich sind.

Aufgabe der Erfindung ist nun die Schaffung eines Schaumglas-Granulates mit verbesserter Druckfestigkeit bei gleichem oder geringerem spezifischen Gewicht sowie die Schaffung eines einfachen und billigen Verfahrens zur Herstellung eines solchen Schaumglas-Granulates.

Das erfindungsgemäße Schaumglas-Granulat ist dadurch gekennzeichnet, daß es aus Bruchstücken eines Schaumglaskörpers besteht und pro $cm^3$ Granulatmasse mindestens 100 000, zweckmäßigerweise mindestens 500 000 und vorzugsweise mindestens 1 000 000, Bläschen aufweist, welche alle von mindestens annähernd gleicher Größe sind.

Die Granulatkörper können abgebördelte Kanten aufweisen.

Gegenstand der Erfindung ist weiter ein Verfahren zur Herstellung des erfindungsgemäßen Schaumglas-Granulates, welches dadurch gekennzeichnet ist, daß man die Rohmaterialien zu einem Mehl vermahlt, dieses mit einem in der Wärme Gas entwickelnden organischen und/oder anorganischen Blähmittel vermischt, das Gemisch in einem Flachbettofen zu einem flachen Schaumglas-Strang bläht, diesen nach dem Blähen abkühlt und unmittelbar nach dem Abkühlen zu Granulat zerkleinert.

Das Blähmittel wird zweckmäßigerweise als gleichmäßige Schicht auf die Glaskornoberfläche aufgebracht.

Zweckmäßigerweise wird das Gemisch von Mehl und Blähmittel vor dem Blähen so schonend vorgetrocknet, daß das im Blähmittel chemisch gebundene Wasser nicht abgetrieben wird.

Bei scharfem Abkühlen zerfällt der Schaumglas-Strang infolge der inneren Spannungen praktisch von selbst zu Granulat, andernfalls wird das Zerkleinern vorzugsweise durch mechanisches Brechen vorgenommen.

Die Erzeugung des Schaumglas-Stranges erfolgt vorzugsweise auf einem umlaufenden, geschlossenen, raupenförmigen, aus Stahlband oder aus einzelnen Gliedern gebildeten Materialträger, welcher im oberen Strang von einem Flachbettofen umschlossen ist.

Die Schichtdicke des zu blähenden Glas-Stranges wird zweckmäßig so bemessen, daß, pro Flächeneinheit, seine Wärmekapazität größer ist, als diejenige des Materialträgers. Die Kühlung des geblähten Schaumglas-Stranges wird zweckmäßig durch Kühlen des Materialträgers vorgenommen.

Die Außenfläche des Materialträgers ist vorzugsweise mit einer Aluminiumoxyd- oder Eisen-Aluminium-Legierungs-Schicht versehen.

Bei der Herstellung von Schaumglasgranulat, bei welchem die Granulatkörper abgebördelte Kanten aufweisen, wird das erhaltene Granulat mechanisch derart bearbeitet, beispielsweise in einer nach Art einer Dragiertrommel arbeitenden Vorrichtung, daß die Kanten gebrochen werden.

Nach dem erfindungsgemäßen Verfahren erhält man ein äußerst feinporiges, sehr leichtes Granulat, das insbesondere als Zuschlagstoff für Leichtbeton und als Füllstoff für Kunststoffe verwendet werden kann. Es ermöglicht insbesondere die Erzeugung eines Schaumglas-Granulates, welches pro $cm^3$ Granulatmasse bis zu 3 000 000 geschlossenen Bläschen und, bei einem spezifischen Gewicht von 0,25, eine Druckfestigkeit von mehr als 130 kg/$cm^2$ aufweist. Derartige physikalische Werte sind mit einem schon im Rohzustand granulierten und anschließend geblähten Granulat nicht erzielbar.

2

**0 012 114**

Beispiel

Zunächst wird ein pastenförmiges Blähmittel hergestellt, indem man

    100 Gewichtsteile Wasser
     32 Gewichtsteile Wasserglas (28° Bé)
      4 Gewichtsteile Glycerin (ungereinigt) und
     15 Gewichtsteile Natriumbentonit (Klärbentonit)

zu einer dünnflüssigen Paste verrührt.

Das so erhaltene Blähmittel wird 500 Gewichtsteilen feingemahlenem Glasmehl beigemischt. Das Gemisch wird bei 120 bis 180° C getrocknet und nötigenfalls mittels eines Siebes von 0,3 mm lichter Maschenweite ausgesiebt.

Das derartig aktivierte Glasmehl wird entweder in dieser Zusammensetzung, oder nach Abmagerung durch Zusatz der bis zu fünffachen Menge Glasmehl, in einer Schichtdicke von 0,5 bis 5 cm bei 780° C in einem Gliederbandofen kurzzeitig gebläht. Am Ausgang des Ofens wird der austretende Schaumglas-Strang abgeschreckt und auf die gewünschte Korngröße zerkleinert.

Falls ein grobkörniges Granulat gewünscht wird, kann auf ein mechanisches Zerkleinern verzichtet werden, sofern das Abschrecken sehr brüsk, z. B. mittels Wasser, vorgenommen wird. In diesem Falle zerfällt der Schaumglas-Strang bereits infolge der inneren Spannungen. Dabei ist das erhaltene Granulat um so feiner, je kleiner die Schichtdicke des Schaumglas-Stranges war.

## Patentansprüche

1. Schaumglas-Granulat, dadurch gekennzeichnet, daß es aus Bruchstücken eines Schaumglas-Körpers beseht und pro $cm^3$ Granulatmasse mindestens 100 000 Bläschen aufweist, welche alle von mindestens angenähert gleicher Größe sind.

2. Schaumglas-Granulat nach Patentanspruch 1, dadurch gekennzeichnet, daß es pro $cm^3$ Granulatmasse mindestens 500 000 Bläschen aufweist.

3. Schaumglas-Granulat nach Patentanspruch 2, dadurch gekennzeichnet, daß es pro $cm^3$ Granulatmasse mindestens 1 000 000 Bläschen aufweist.

4. Schaumglas-Granulat nach einem der Patentansprüche 1 bis 3, dadurch gekennzeichnet, daß die Granulatkörper abgebördelte Kanten aufweisen.

5. Verfahren zur Herstellung eines Schaumglas-Granulates nach einem der Patentansprüche 1 bis 3, dadurch gekennzeichnet, daß man die Rohmaterialien zu einem Mehl vermahlt, dieses mit einem in der Wärme Gas entwickelnden organischen und/oder anorganischen Blähmittel vermischt, das Gemisch in einem Flachbettofen zu einem flachen Schaumglas-Strang bläht, diesen nach dem Blähen abkühlt und unmittelbar nach dem Abkühlen zu Granulat zerkleinert.

6. Verfahren nach Patentanspruch 5, dadurch gekennzeichnet, daß man das Blähmittel als gleichmäßige Schicht auf die Glaskornoberfläche aufbringt.

7. Verfahren nach Patentanspruch 5, dadurch gekennzeichnet, daß man das Gemisch von Mehl und Blähmittel vor dem Blühen so schonend vortrocknet, daß das im Blähmittel chemisch gebundene Wasser nicht abgetrieben wird.

8. Verfahren nach einem der Patentansprüche 5 bis 7, dadurch gekennzeichnet, daß man das Zerkleinern des Schaumglas-Stranges durch mechanisches Brechen vornimmt.

9. Verfahren nach einem der Patentansprüche 5 bis 8, dadurch gekennzeichnet, daß man den Schaumglas-Strang auf einem umlaufenden, geschlossenen, raupenförmigen, aus Stahlblechband oder aus einzelnen Gliedern gebildeten Materialträger erzeugt, welcher im oberen Strang von einem Flachbettofen umschlossen ist.

10. Verfahren nach Patentanspruch 9, dadurch gekennzeichnet, daß man die Schichtdicke des zu blühenden Glas-Stranges so bemißt, daß, pro Flächeneinheit, seine Wärmekapazität größer ist als diejenige des Materialträgers.

11. Verfahren nach Patentanspruch 9 oder 10, dadurch gekennzeichnet, daß man die Kühlung des geblähten Schaumglas-Stranges durch Kühlen des Materialträgers vornimmt.

12. Verfahren nach Patentanspruch 9, dadurch gekennzeichnet, daß die Außenfläche des Materialträgers mit einer Aluminiumoxyd- oder Eisen-Aluminium-Legierungs-Schicht versehen ist.

13. Verfahren nach Patentanspruch 5 zur Herstellung von Schaumglas-Granulat nach Patentanspruch 4, dadurch gekennzeichnet, daß man das erhaltene Granulat mechanisch derart bearbeitet, daß die Kanten gebrochen werden.

# 0 012 114

## Claims

1. Foam-glass granulate, characterized in that it consists of fragment of a foamed glass solid comprising at least 100,000 cavities per cm³ of the mass of the granules all of which having at least approximatively the same size.

2. Foam-glass granulate according to patent claim 1, characterized in that it contains at least 500,000 cavities per cm³ of the mass of the granules.

3. Foam-glass granulate according to patent claim 2, characterized in that it contains at least 1,000,000 cavities per cm³ of the mass of the granules.

4. Foam-glass granulate according to one of patent claims 1 to 3, characterized in that the grains of foam-glass have broken edges.

5. Process for the preparation of a foam-glass granulate according to one of patent claims 1 to 3, characterized in that the raw material are ground into a flour, the said flour is mixed with an organic or inorganic inflating agent which releases gas when heated, the said mixture is inflated, in a flat-bed furnance, into a flat lenght of foam-glass which is quenched after inflation, and it disintegrated to granular material immediately after cooling.

6. Process according to patent claim 5, characterized in that the inflating agent is applied in a uniform layer to the surface of the glass grains.

7. Process according to patent claim 5, characterized in that the mixture of the flour and the inflating agent is pre-dried, before being inflated, so carefully that the water chemically bound in the inflating agent is not expelled.

8. Process according to one of patent claims 5 to 7, characterized in that the length of foam-glass is disintegrated by mechanical crushing.

9. Process according to one of patent claims 5 to 8, characterized in that the length of foam-glass is produced upon a circulating, endless, carterpillar-track material-carrier, made of steel strip or separate elements, the upper run thereof being enclosed in a flatbed furnance.

10. Process according to patent claim 9, characterized in that the thickness of the length of glass to be inflated is such that the thermal capacity thereof, per unit of area, is greater that that of the material-carrier.

11. Process according to patent claim 9 or 10, characterized in that the length of inflated foam-glass is cooled by cooling the material-carrier.

12. Process according to patent claim 9, characterized in that the outer surface of the material-carrier is coated by a layer of aluminia or an iron-aluminium alloy.

13. Process according to patent claim 5 for the preparation of a foam-glass granulate according to patent claim 4, characterized in that the granular material obtained is mechanically processed in such a manner as to break the edges there of.

## Revendications

1. Granulés de verre-mousse, caractérisés en ce qu'ils sont composés des fragments d'un corps de verre-mousse et qu'ils contiennent au moins 100 000 pores/cm³ de masse granulée ayant approximativement le même ordre de grandeur.

2. Granulés de verre-mousse selon la revendication 1, caractérisés en ce qu'ils contiennent au moins 500 000 pores/cm³ de masse granulée.

3. Granulés de verre-mousse selon la revendication 2, caractérisés en ce qu'ils contiennent au moins 1 000 000 pores/cm³ de masse granulée.

4. Granulés de verre-mousse selon l'une des revendications 1 à 3, caractérisés en ce les granules comprennent des arêtes bordées.

5. Procédé pour la fabrication des granulés de verre-mousse selon l'une des revendications 1 à 3, caractérisé en ce qu'on broie la matière première pour en faire une poudre, mélange avec un agent porogène organique et/ou inorganique qui dégage du gaz à la chaleur, porte le mélange par chauffage dans un four à lit plat à gonflement pour en faire une boudin de verre-mousse platte, le refroit après le gonflement et le broie pour en faire des granulés immédiatement après le refroidissement.

6. procédé selon la revendication 5, caractérisé en ce qu'on applique l'agent porogène sur la surface du grain de verre comme une couche égale.

7. Procédé selon la revendication 5, caractérisé en ce qu'on fait sécher le mélange du verre pulverisé et de l'agent porogène tellement indulgent que l'eau liée chimiquement dans l'agent porogène n'est pas éliminée.

8. Procédé selon l'une des revendications 5 à 7, caractérisé en ce qu'on fait le broyage de la boudin de verre-mousse par brisement mechanique.

9. Procédé selon l'une des revendications 5 à 8, caractérisé en ce qu'on produit la boudin de verre-mousse sur un support sans fin, fermé et sous forme de chenille formé d'un ruban en acier ou formé des membres séparés (individuels) où la partie supérieure de la boudin est entourée par un four à lit plat.

4

**0 012 114**

10. Procédé selon la revendication 9, caractérisé en ce qu'on mesure l'epaisseur de couche de la boudin de verre à gonfler de telle manière que sa capacité calorifique est plus grande que celle du support.

11. Procédé selon la revendication 9 ou 10 caractérisé en ce qu'on refroit la boudin de verre-mousse gonflée par refroidissement du support.

12. Procédé selon la revendication 9, caractérisé en ce qu'on utilise un support les surfaces extérieures du quel sont fournies avec une couche d'oxyde d'aluminium ou d'un alliage de fer-aluminium.

13. Procédé selon la revendication 5 pour fabriquer les granulés de verre-mousse selon la revendication 4, caractérisé en ce qu'on façonne les granulés obtenus de telle manière que les arêtes sont brisées.

5